# EUROPÄISCHE PATENTSCHRIFT

(11) **EP 3 410 588 B1**
(45) Veröffentlichungstag und Bekanntmachung des Hinweises auf die Patenterteilung: **31.08.2022**
(21) Anmeldenummer: 18170897.5
(22) Anmeldetag: 04.05.2018
(51) Int. Cl.: H02K 49/10

(54) **MAGNETISCHES UMLAUFGETRIEBE MIT VARIIERBAREM DREHMOMENT**
MAGNETIC EPICYCLIC GEAR WITH VARIABLE TORQUE
ENGRENAGE MAGNÉTIQUE À COUPLE DE ROTATION VARIABLE

(30) Priorität: 29.05.2017 DE 102017208985
(43) Veröffentlichungstag der Anmeldung: 05.12.2018
(73) Patentinhaber: Deere & Company, Moline, IL 61265 (US)
(72) Erfinder: Lang, Matthias, 68163 Mannheim (DE); Suess, David, 68163 Mannheim (DE); Frassek, Steffen, 68163 Mannheim (DE); Raisch, Stefan, 68163 Mannheim (DE)
(74) Vertreter: Dehnhardt, Florian Christopher

(56) Entgegenhaltungen:
- EP-A1- 2 411 699
- EP-A2- 1 936 238
- CN-A- 106 341 031
- DE-A1-102012 022 456
- US-A- 5 675 203
- US-A1- 2011 215 668
- US-A1- 2013 002 075

## Beschreibung

Die Erfindung betrifft magnetisches Umlaufgetriebe mit einem variierbaren Drehmoment und weiterhin ein Verfahren zur Steuerung.

Magnetische Umlaufgetriebe werden zur Drehmomentübertragung genutzt. Diese sind hinreichend bekannt. Ein solches magnetisches Umlaufgetriebe ist in DE 10 2016 210 333.4 gezeigt. Sie bieten gegenüber mechanischen Umlaufgetriebestufen Vorteile, wie eine sichere Begrenzung des zu übertragenden Drehmoments. Im Falle eines zu hohen Drehmomentes kann das magnetische Umlaufgetriebe überdrehen oder durchrutschen und begrenzt dadurch das übertragene Drehmoment auf voreingestellte Parameter. DE 10 2016 210 333.4 dient zugleich als Grundlage und ist vollständig in die vorliegende Erfindung mit einbezogen.

US 2011/215668A1 beschreibt ein magnetisches Getriebe.

DE102012022456A1 zeigt ein Planetengetriebe mit einer magnetischen Koppelstrecke.

CN106341031A offenbart eine Magnetfeld-modulierte Magnetschraube.

US2013/002075A1 beschreibt ein weiteres magnetisches Getriebe.

EP2411699A1 zeigt ein weiteres magnetisches Getriebe.

US5675203A offenbart einen Elektromotor oder Generator mit verschiebbarem Stator.

EP1936238A2 beschreibt ein magnetisches Getriebe mit einstellbarer Phase.

Das Verhalten zur Drehmomentbegrenzung einer magnetischen Getriebestufe ist durch die Konstruktion festgelegt und sämtliche Geometrien, die hierbei definiert werden, tragen zu dem Verhalten des magnetischen Umlaufgetriebes und der übertragbaren Höhe des Drehmoments bei. Während dem Betrieb sind diese Kenngrößen somit nicht mehr anpassbar bzw. es muss eine vollständige Neukonstruktion erfolgen.

Die Möglichkeit, die Drehmomentübertragung im Betrieb weiterhin verändern zu können, würde den Einsatz des magnetischen Umlaufgetriebes als Drehmomentwandler und zusätzlich als variablen Drehmomentbegrenzer erlauben. Weiterhin könnte auch der Einsatz als Kupplung ermöglicht werden. In weiterer Folge wäre dadurch eine Reduzierung der Komplexität möglich, durch die Reduktion von Bauteilen, Kostensenkung und Bauraumverkleinerung.

Es ist die Aufgabe der vorliegenden Erfindung, ein magnetisches Umlaufgetriebe zur Verfügung zu stellen, bei welchem die Parameter während dem Betrieb einstellbar sind.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße magnetisches Umlaufgetriebe umfasst einen inneren Ring mit einer ersten Anzahl von Magnetpolen, einen mittleren Ring mit einer Anzahl ferromagnetischer Stäbe, einen äußeren Ring mit einer zweiten Anzahl von Magnetpolen, die sich von der ersten Anzahl unterscheidet, und eine Steuerung, wobei der mittlere Ring derart konfiguriert ist, dass das übertragbare Drehmoment während dem Betrieb durch die Steuerung variierbar ist.

Das Umlaufgetriebe erlaubt ein einstellbares, zu übertragendes Drehmoment. Mit Hilfe der Steuerung kann eine Überwachung des Drehmoments durchgeführt werden. Durch eine Auswertung der Kennzahlen ist eine Load-Sensing Funktion ermöglicht, die gezielt ein bestimmtes Drehmomentniveau festlegt, überwacht und gegebenenfalls anpasst. Das Umlaufgetriebe kann als variabler Drehmomentbegrenzer eingesetzt werden. Die Drehmomentüberwachung kann an sich verändernde Umgebungsbedingungen oder Betriebszustände angepasst werden. Mittels der Drehbegrenzungsfunktion kann das Umlaufgetriebe auch als Trennkupplung eingesetzt werden, die eine Leistungsunterbrechung ab einem bestimmten Niveau automatisch umsetzt und angeschlossenen Baukomponenten oder Anhängebauteile vor einer Überlastung und damit vor einer Beschädigung schützt.

In einer weitere Ausführung ist der mittlere Ring derart konfiguriert, dass die Geometrie des Umlaufgetriebes veränderbar ist.

Die Geometrie kann dabei diskret oder kontinuierlich verändert werden. Der Luftspalt zwischen den einzelnen Ringen kann in kleinen Schritten angepasst werden oder konstruktiv durch feste Positionsveränderungen realisiert werden. Dies kann auch für die Breite erfolgen. Es ist möglich, die Spaltposition zu verschieben, etwa durch seitliches Verschieben von benachbarten Ringen. Es können abschnittsweise auf den Ringen unterschiedliche Materialen für die ferromagnetischen Stäbe oder die Magnetpole zum Einsatz kommen. Durch ein diskretes Verschieben oder Verdrehen können die Materialeigenschaften und damit die Kennzahlen des Umlaufgetriebes verändert werden. Das Umlaufgetriebe erlaubt eine Anpassung der Drehmomentdurchlässigkeit und ist flexibel einsetzbar.

Bei einer Ausbildung ist der mittlere Ring derart konfiguriert, dass der Spalt zwischen dem äußeren und dem mittleren Ring veränderbar ist.

Durch ein Verändern des Spalts können die Kennwerte des Umlaufgetriebes verstellt werden. Der magnetische Fluss wird verändert, wobei das Durchrutschverhalten des Umlaufgetriebes beeinflusst wird. Die Veränderung kann entweder durch ein axiales Verschieben oder durch ein Verdrehen eines kreisförmigen Ringbereichs erfolgen.

In einer Weiterbildung ist der mittlere Ring derart konfiguriert, dass der Spalt zwischen dem inneren und dem mittleren Ring veränderbar ist. Die Veränderung kann entweder durch ein axiales Verschieben oder durch ein Verdrehen eines kreisförmigen Ringbereichs erfolgen. Durch ein Verändern des Spalts können die Kennwerte des Umlaufgetriebes verstellt werden. Der magnetische Fluss wird verändert, wobei das Durchrutschverhalten des Umlaufgetriebes beeinflusst wird.

Bei einer Ausführung ist der mittlere Ring axial verschiebbar.

Mit der axialen Verschiebung kann die Geometrie des Ringspalts und damit die magnetische Kennlinie verändert werden und eine Anpassung des Rutschmoments vorgenommen werden.

In einer weiteren Ausbildung weist der mittlere Ring wenigstens zwei Gruppen von, aus unterschiedlichem Material gebildeten, ferromagnetischen Stäben auf, die derart am mittleren Ring vorgesehen sind, dass jeweils eine Gruppe durch axiales Verschieben Drehmoment überträgt.

Je eine Gruppe kommt etwa durch Verdrehen oder Verschieben des Rings in den wirksamen Eingriff. Aufgrund der unterschiedlichen Materialgruppen kann vorteilhaft die Kennlinie des Umlaufgetriebes verändert werden. Es ist auch möglich, hierdurch eine Kupplungsfunktion umzusetzen. Beide Materialgruppen haben unterschiedlichen magnetische Kennwerte, so dass durch ein Umschalten zwischen diesen ein geändertes Verhalten des Umlaufgetriebes einstellbar ist. Hierdurch wird vermieden, dass das Umlaufgetriebe lediglich eine Betriebsart aufweist und es können mehrere Betriebsarten realisiert werden.

Bei einer Weiterbildung ist der mittlere Ring derart konfiguriert, dass die Breite des Spalts zwischen dem äußeren und dem mittleren Ring veränderbar ist.

Die Veränderung kann entweder durch ein axiales Verschieben oder durch ein Verdrehen eines kreisförmigen Ringbereichs erfolgen.

Der mittlere Ring kann so vorgesehen sein, dass etwa durch axiales Verschieben eine Änderungen des Spalts verursacht wird. Es ist denkbar, die Spaltveränderung durch Verdrehen des Rings relativ zu einer Nulllage durchzuführen. Mit der Spaltänderung wird die magnetische Kennlinie verändert, so dass eine Anpassung des Umlaufgetriebes durchführbar ist.

In einer Ausführung ist der mittlere Ring derart konfiguriert, dass die Breite des Spalts zwischen dem inneren und dem mittleren Ring veränderbar ist.

Die Veränderung kann entweder durch ein axiales Verschieben oder durch ein Verdrehen eines kreisförmigen Ringbereichs erfolgen.

Der mittlere Ring kann so vorgesehen sein, dass etwa durch axiales Verschieben eine Änderungen des Spalts verursacht wird. Es ist denkbar, die Spaltveränderung durch Verdrehen des Rings relativ zu einer Nulllage durchzuführen. Mit der Spaltänderung wird die magnetische Kennlinie verändert, so dass eine Anpassung des Umlaufgetriebes durchführbar ist.

Bei einer Ausgestaltung weist der äußere Ring elektrische Spulen auf, um die Magnetpole zu bilden.

Die elektrischen Spulen können durch eine Steuerung aktiv ansteuerbar sein. Dies ermöglicht das abgestimmte An- und Abschalten einzelner Spulenbaugruppen. Dies verändert wiederrum die Kennzahlen des Umlaufgetriebes, wodurch ein Schlupfmoment einstellbar ist. Mit Hilfe von aktiven Spulen können zahlreiche unterschiedliche Konfigurationen realisiert werden, die eine Abstufung des Schlupfmomentes während dem Betrieb ermöglicht.

In einer Ausbildung weist der innere Ring elektrische Spulen auf, um die Magnetpole zu bilden.

Die elektrischen Spulen können durch eine Steuerung aktiv ansteuerbar sein. Dies ermöglicht das abgestimmte An- und Abschalten einzelner Spulenbaugruppen. Dies verändert wiederrum die Kennzahlen des Umlaufgetriebes, wodurch ein Schlupfmoment einstellbar ist. Mit Hilfe von aktiven Spulen können zahlreiche unterschiedliche Konfigurationen realisiert werden, die eine Abstufung des Schlupfmomentes während dem Betrieb ermöglicht.

Weitere Ausbildungen der Erfindung werden in den folgenden Figuren beschreiben. Dabei zeigen:
Figur 1 eine Ausführung der Erfindung in einem landwirtschaftlichen Fahrzeug;
Figur 2 eine Ausbildung der Erfindung in einem Fahrzeug zur Bearbeitung von Grünflächen;
Figur 3 einen beispielhaften Aufbau der Erfindung;
Figur 4 einen Querschnitt einer Ausführung der Erfindung;
Figur 5 einen weiteren Querschnitt einer Ausführung der Erfindung.

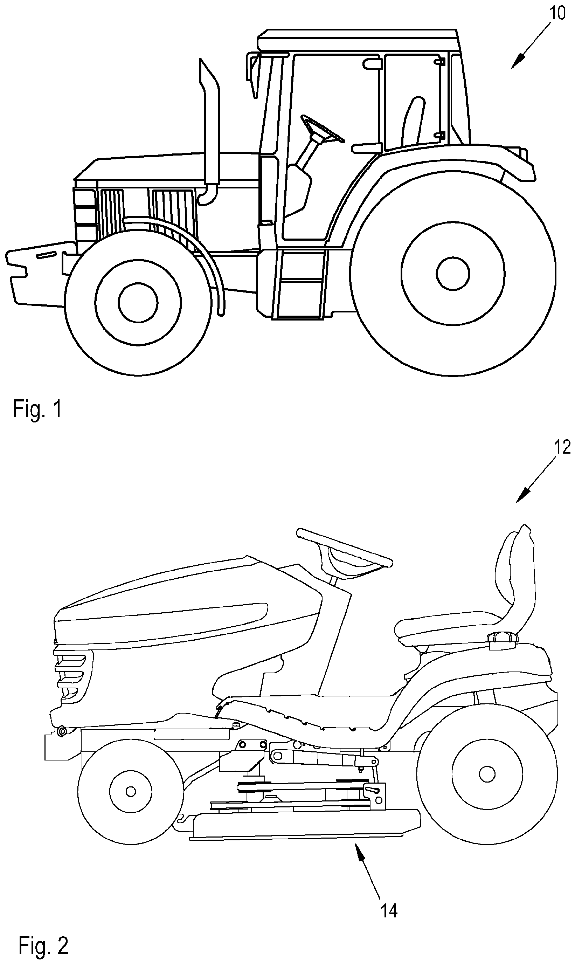

Figur 1 zeigt ein landwirtschaftliches Fahrzeug 10, in dem die erfindungsgemäße magnetische Getriebestufe 16 verwendet wird. Landwirtschaftliche Fahrzeuge verfügen zusätzlich zum Fahrzeugantrieb über einen Zapfwellenantrieb, mit dem angehängte Fahrzeuge oder Maschinen angetrieben werden können. Die erfindungsgemäße Getriebestufe 16 kann hierbei als variabler Drehmomentbegrenzer zur Einstellung einer bestimmten, an die Nebenaggregate abgegebenen, Leistung verwendet werden, die über die Zapfwelle übertragen wird. Ebenso kann die erfindungsgemäße Getriebestufe 16 für die Messung einer übertragenen Leistung verwendet werden. Die Getriebestufe 16 kann in einem Antriebsstrang, etwa zwischen einem Antriebsaggregat und dem Fahrwerk oder einem vorhandenen Schneidwerk oder Bodenwerkzeug vorgesehen sein. Weiterhin ist denkbar, die erfindungsgemäße Getriebestufe 16 im Nebenaggregat bzw. Anhängefahrzeug selbst vorzusehen und zu verwenden.

Figur 2 zeigt einen Arbeitsfahrzeug 12 für Grünflächen, zum Beispiel einen Aufsitzmäher. Die erfindungsgemäße Getriebestufe 16 kann hierbei im Antriebsstrang vorgesehen sein. Dabei kann diese zur Übertragung von Leistung vom Antriebsaggregat an das Fahrwerk verwendet werden. Sie kann auch für den Antrieb der Mähwerkzeuge oder weiterer Bodenwerkzeuge vorgesehen sein. Vorteilhaft ist das Durchrutschverhalten der Getriebestufe 16, wenn beispielsweise das Mähwerkzeug blockiert wird. Das Durchrutschverhalten der Getriebestufe 16 ermöglicht ein Entkoppeln des Mähwerkzeugs vom Antrieb und verhindert, dass kurzzeitig weiter Leistung übertragen wird. Das Mähwerkzeug kann abbremsen oder ausweichen, so dass eine Beschädigung des Werkzeugs verhindert wird.

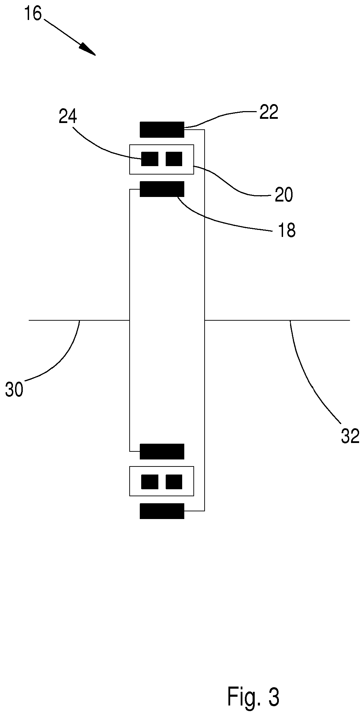

Figur 3 zeigt eine funktionale Ausführung der erfindungsgemäßen magnetischen Getriebestufe 16. Die Getriebestufe 16 besteht insbesondere aus einem inneren Ring 18, einem mittleren Ring 20 und einem äußeren Ring 22. Der mittlere Ring 20 weist dabei ferromagnetische Stäbe 24 auf, die durch schwarze Rechtecke dargestellt sind. Der äußere Ring 22 und der innere Ring 18 weisen jeweils Magnetpole 26, 28 auf, die sich in ihrer Anzahl jeweils voneinander unterscheiden und zusammen mit den ferromagnetischen Stäben 24 des mittleren Rings 20 zusammenwirken. Die Getriebestufe 16 weist eine erste Drehmomentenschnitttstelle 30 auf, etwa in Form einer Welle, die auch eine Hohlwelle sein kann. Das eingeleitete Drehmoment wird in der vorliegenden Ausführung zunächst an den inneren Ring 18 geleitet. Dieser steht über die Anordnung der Magnetpole 26, 28 sowohl mit dem mittleren Ring 20, als auch dem äußeren Ring 22 in Wirkverbindung. Das eingeleitete Drehmoment wird durch den mittleren Ring 20 moduliert und an den äußeren Ring 22 geleitet. Das veränderte Drehmoment wird durch den äußeren Ring 22 an eine zweite Drehmomentenschnittstelle 32 weitergeleitet. Denkbar sind auch andere Aufbauten, die je nach Anwendung zweckmäßig erscheinen. So kann die Drehmomenteinleitung auch in umgekehrter Reihenfolge durchgeführt werden, oder die Einleitung oder Ausleitung über den mittleren Ring 20 erfolgen.

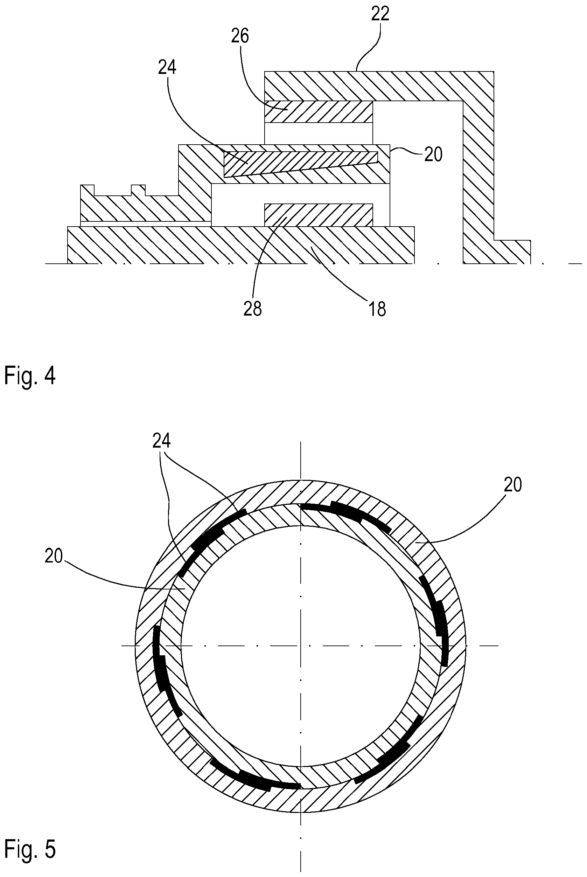

Figur 4 zeigt einen Längsschnitt durch einen erfindungsgemäßen Aufbau der magnetischen Getriebestufe 16. Der innere Ring 18 weist dabei in einer Ebene senkrecht zur Längsachse Magnetpole 28 auf, die an einem Umfang des inneren Rings 18 verteilt sind. Der innere Ring 18 kann in Form einer Welle oder auch einer Hohlwelle ausgebildet sein. Die Anzahl der Magnetpole 28 am inneren Ring 18 kann beliebig sein. Diese legt jedoch zusammen mit der Anzahl der ferromagnetischen Stäbe 24 und der Anzahl der Magnetpole 26 am äußeren Ring 22 das Verhalten der erfindungsgemäßen Getriebestufe 16 fest. Ein äußerer Ring 22, mit einer unterschiedlichen Anzahl von Magnetpolen 26, ist in der gleichen Ebene vorgesehen. Am äußeren Ring 22 sind die Magnetpole 26 ebenfalls am einem Umfang verteilt angeordnet.

Zwischen dem inneren Ring 18 und dem äußeren Ring 22 ist ein mittlerer Ring 20 vorgesehen, der ferromagnetische Stäbe 24 aufweist. Ein ferromagnetischer Stab 24 ist in Fig. 4 im Längsschnitt gezeigt. Dabei weist der Stab 24 einen keilförmigen Querschnitt auf und erstreckt sich in axialer Richtung des magnetischen Umlaufgetriebes 16 mit einer größeren Länge über die Ebene der Magnetpole 26, 28 hinaus. Der mittlere Ring 20 stützt die ferromagnetischen Stäbe 24 und ist derart gelagert, dass er eine axiale Verschiebung des mittleren Rings 20 relativ zum inneren Ring 18 und zum äußeren Ring 22 gestattet. Weiterhin kann sich der mittlere Ring 20 unabhängig von den weiteren Ringen um die Längsachse drehen oder relativ zu den weiteren Ringen in Stillstand gesetzt werden. Das axiale Verschieben des mittleren Rings 20 kann durch ein Nut-Feder Profil oder ein Gewinde realisiert sein, mit dem der mittlere Ring 20 in einem Gehäuse gehalten ist. Aufgrund des Keilprofils der ferromagnetischen Stäbe 24 und der Längsverschieblichkeit des mittleren Rings 20 können die Abschnitte der ferromagnetischen Stäbe 24, die sich im Wirkeingriff mit dem äußeren Ring 22 und dem inneren Ring 18 befinden, variiert werden, so dass ein zu-oder abnehmender aktiver Querschnitt der ferromagnetischen Stäbe 24 eingestellt werden kann. Hierdurch lassen sich die Parameter des magnetischen Umlaufgetriebes 16 verändern und an die Betriebsbedingungen anpassen. Durch die Veränderung des Querschnitts der ferromagnetischen Stäbe 24 kann etwa die magnetische Übersetzung zwischen dem inneren Ring 18 und dem äußeren Ring 22 verändert werden, so dass ein Übersetzungsverhältnis zwischen einem Eingang und Ausgang der Getriebestufe 16 einstellbar ist. Es ist weiterhin möglich, dadurch die Getriebestufe 16 auch vollständig stillzusetzten, so dass keine Leistung übertragen wird. Im Falle einer Blockade auf der Ausgangsseite der Getriebestufe 16 führt ein Stillstand der Ausgangswelle lediglich zu einem Stillstand des äußeren Rings 22 und der Magnetpole 26. Eine mechanische Verbindung zwischen den einzelnen Ringen besteht nicht, so dass ein Verspannen vermieden wird, ebenso wie mögliche Beschädigungen und Verschleiß.

Figur 5 zeigt einen Querschnitt des mittleren Rings 20 bei einer weiteren Ausführung. Der mittlere Ring 20 weist eine zweigeteilte Form auf. Dabei ist der mittlere Ring 20 durch einen äußeren und inneren zylinderförmigen Bereich gebildet, wobei sich beide Bereiche gegeneinander verdrehen oder verschieben lassen. Beide Bereiche weisen ferromagnetische Stäbe 24 auf. Durch das Verdrehen oder Verschieben der beiden Bereiche kommt es zwischen den ferromagnetischen Stäben 24 in den jeweiligen Bereichen zur Überlappung, so dass je nach Überlappung die magnetische Kennlinie des mittleren Rings 20 insgesamt verändert wird. Die beiden Bereiche können eine unterschiedliche Anzahl von ferromagnetischen Stäben 24 aufweisen. Die ferromagnetischen Stäbe 24 können auch an unterschiedlichen Umfangswinkeln der beiden Bereiche vorgesehen sein, so dass eine Abstufung des Überlappung der ferromagnetischen Stäbe 24 am Umfang durch Verdrehen oder Verschieben eingestellt werden kann.

Die Positionen der beiden Bereiche des mittleren Rings 20 können hierbei durch einen Stellantrieb angesteuert werden, so dass eine angepasste Leistungsübertragung der Getriebestufe 16 einstellbar ist.

## Patentansprüche

1. Magnetisches Umlaufgetriebe (16), umfassend
einen inneren Ring (18) mit einer ersten Anzahl von Magnetpolen (26, 28),
einen mittleren Ring (20) mit einer Anzahl ferromagnetischer Stäbe (24),
einen äußeren Ring (22) mit einer zweiten Anzahl von Magnetpolen (26, 28), die sich von der ersten Anzahl unterscheidet,
wobei der mittlere Ring (20) axial verschiebbar ist,
wobei ferromagnetischen Stäbe (24) in axialer Richtung einen keilförmigen Querschnitt aufweisen, so dass ein Luftspalt zwischen dem äußeren (22) und dem mittleren Ring (20) oder zwischen dem inneren (18) und dem mittleren Ring (20) durch das axiale Verschieben veränderbar ist, wodurch das übertragbare Drehmoment während dem Betrieb variierbar ist.

2. Magnetisches Umlaufgetriebe (16) nach Anspruch 1, wobei der mittlere Ring (20)
derart konfiguriert ist, dass die Geometrie des Umlaufgetriebes (16) durch ein axiales Verschieben oder durch ein Verdrehen eines kreisförmigen Ringbereichs veränderbar ist.

3. Magnetisches Umlaufgetriebe (16) nach Anspruch 1, wobei der mittlere Ring (20) wenigstens zwei Gruppen von, aus unterschiedlichem Material gebildeten, ferromagnetischen Stäben (24) aufweist, die derart am mittleren Ring (20) vorgesehen sind, dass jeweils eine Gruppe durch axiales Verschieben Drehmoment überträgt.

4. Magnetisches Umlaufgetriebe (16) nach einem der vorangehenden Ansprüche, wobei der mittlere Ring (20) derart konfiguriert ist, dass die Breite eines Spalts zwischen dem äußeren (22) und dem mittleren Ring (20) durch ein axiales Verschieben oder durch ein Verdrehen eines kreisförmigen Ringbereichs veränderbar ist.

5. Magnetisches Umlaufgetriebe (16) nach einem der vorangehenden Ansprüche, wobei der mittlere Ring (20) derart konfiguriert ist, dass die Breite eines Spalts zwischen dem inneren (18) und dem mittleren Ring (20) durch ein axiales Verschieben oder durch ein Verdrehen eines kreisförmigen Ringbereichs veränderbar ist.

6. Magnetisches Umlaufgetriebe (16) nach einem der vorangehenden Ansprüche, wobei der äußere Ring (22) elektrische Spulen aufweist, um die Magnetpole (26, 28) zu bilden.

7. Magnetisches Umlaufgetriebe (16) nach einem der vorangehenden Ansprüche, wobei der innere Ring (18) elektrische Spulen aufweist, um die Magnetpole (26, 28) zu bilden.

## Claims

1. Magnetic epicyclic gearbox (16) comprising
an inner ring (18) with a first number of magnetic poles (26, 28),
a middle ring (20) with a number of ferromagnetic bars (24),
an outer ring (22) with a second number of magnetic poles (26, 28), which differs from the first number,
wherein the middle ring (20) is axially displaceable,
wherein the ferromagnetic bars (24) have a wedge-shaped cross section in the axial direction such that an air gap between the outer ring (22) and the middle ring (20) or between the inner ring (18) and the middle ring (20) is variable by the axial displacement, with the result that the transmissible torque is variable during operation.

2. Magnetic epicyclic gearbox (16) according to Claim 1, wherein the middle ring (20) is configured such that the geometry of the epicyclic gearbox (16) is variable by axial displacement or by turning of an circular ring region.

3. Magnetic epicyclic gearbox (16) according to Claim 1, wherein the middle ring (20) has at least two groups of ferromagnetic bars (24) formed from different material, which are provided on the middle ring (20) such that in each case one group transmits torque by axial displacement.

4. Magnetic epicyclic gearbox (16) according to one of the preceding claims, wherein the middle ring (20) is configured such that the width of a gap between the outer ring (22) and the middle ring (20) is variable by axial displacement or by turning of a circular ring region.

5. Magnetic epicyclic gearbox (16) according to one of the preceding claims, wherein the middle ring (20) is configured such that the width of a gap between the inner ring (18) and the middle ring (20) is variable by axial displacement or by turning of a circular ring region.

6. Magnetic epicyclic gearbox (16) according to one of the preceding claims, wherein the outer ring (22) has electric coils in order to form the magnetic poles (26, 28).

7. Magnetic epicyclic gearbox (16) according to one of the preceding claims, wherein the inner ring (18) has electric coils in order to form the magnetic poles (26, 28).

## Revendications

1. Transmission planétaire magnétique (16), comprenant
une bague intérieure (18) pourvue d'un premier nombre de pôles magnétiques (26, 28),
une bague intermédiaire (20) pourvue d'un nombre de barres ferromagnétiques (24),
une bague extérieure (22) pourvue d'un deuxième nombre de pôles magnétiques (26, 28) qui est différent du premier nombre,
la bague intermédiaire (20) pouvant être déplacée axialement,
les barres ferromagnétiques (24) présentant une section transversale conique dans la direction axiale de sorte qu'un entrefer entre la bague extérieure (22) et la bague intermédiaire (20) ou entre la bague intérieure (18) et la bague intermédiaire (20) peut être modifié par le déplacement axial de sorte que le couple transmissible peut varier en cours de fonctionnement.

2. Transmission planétaire magnétique (16) selon la revendication 1, dans laquelle la bague intermédiaire (20) est configurée de telle sorte que la géométrie de la transmission planétaire (16) peut être modifiée par un déplacement axial ou par une rotation d'une zone de bague circulaire.

3. Transmission planétaire magnétique (16) selon la revendication 1, dans laquelle la bague intermédiaire (20) présente au moins deux groupes de barres ferromagnétiques (24) composés de différents matériaux et qui sont prévus sur la bague intermédiaire (20) de telle sorte que respectivement un groupe transmet le couple par déplacement axial.

4. Transmission planétaire magnétique (16) selon l'une quelconque des revendications précédentes, dans laquelle la bague intermédiaire (20) est configurée de telle sorte que la largeur d'un intervalle entre la bague extérieure (22) et la bague intermédiaire (20) peut être modifiée par un déplacement axial ou par une rotation d'une zone de bague circulaire.

5. Transmission planétaire magnétique (16) selon l'une quelconque des revendications précédentes, dans laquelle la bague intermédiaire (20) est configurée de telle sorte que la largeur d'un intervalle entre la bague intérieure (18) et la bague intermédiaire (20) peut être modifiée par un déplacement axial ou par une rotation d'une zone de bague circulaire.

6. Transmission planétaire magnétique (16) selon l'une quelconque des revendications précédentes, dans laquelle la bague extérieure (22) présente des bobines électriques pour former les pôles magnétiques (26, 28).

7. Transmission planétaire magnétique (16) selon l'une quelconque des revendications précédentes, dans laquelle la bague intérieure (18) présente des bobines électriques pour former les pôles magnétiques (26, 28).
